# EUROPÄISCHE PATENTSCHRIFT

(11) **EP 3 321 128 B1**
(45) Veröffentlichungstag und Bekanntmachung des Hinweises auf die Patenterteilung: **07.10.2020**
(21) Anmeldenummer: 17199782.8
(22) Anmeldetag: 02.11.2017
(51) Int. Cl.: B60N 3/02

(54) **HALTESTANGENVORRICHTUNG**
HOLDING ROD DEVICE
DISPOSITIF FORMANT TIGE DE RETENUE

(30) Priorität: 11.11.2016 DE 102016222147
(43) Veröffentlichungstag der Anmeldung: 16.05.2018
(73) Patentinhaber: Bombardier Transportation GmbH, 10785 Berlin (DE)
(72) Erfinder: Roche, Fabrice, 1030 Wien (AT); Monarth, Andreas, 1090 Wien (AT)
(74) Vertreter: Patentanwälte Bressel und Partner mbB

(56) Entgegenhaltungen:
- DE-A1- 1 400 855
- DE-A1-102011 006 383
- DE-U1- 9 314 961

## Beschreibung

Die Erfindung betrifft eine Haltestangenvorrichtung für Fahrzeuge. Einsatzgebiete sind der öffentliche Nah- und Fernverkehr.

Haltestangen sind in Fahrzeugen für den öffentlichen Personentransport notwendig, damit die Passagiere die Möglichkeit haben sich festzuhalten und dadurch Verletzungen vorzubeugen.

Üblicherweise sind solche Haltestangen im Innenraum der Fahrzeuge des öffentlichen Nah- und Fernverkehrs über angeschweißte Platten an ortsfesten Teilen, wie beispielsweise dem Wagenboden, verschraubt.

Dies stört jedoch den ästhetischen Gesamteindruck, zudem werden der Fußbodenbelag des Wagenbodens oder andere Innenausbauteile dauerhaft geschädigt und müssen bei einem Umbau komplett ausgetauscht werden.

Weiter können Toleranzen zwischen den ortsfesten Teilen des Fahrzeuginnenraums nicht ausgeglichen werden.

Aus der DE9314961 (U1) ist eine Anordnung zur Befestigung einer Haltestange bekannt, die an ihren Enden mit ortsfesten Teilen des Fahrzeug verdrehfest verbunden ist, wobei mindestens an einem Ende ein Füllstück von der Öffnung der Haltestange beabstandet angeordnet ist. Das Füllstück weist eine axial angeordnete Gewindebohrung auf, in der der Gewindebolzen eines mit einer axialen Sackbohrung versehenen Druckstückes eingeschraubt ist. Die Sackbohrung nimmt einen an einem ortsfesten Teil des Fahrzeugs befestigten Kern auf. Das Füllstück weist eine radial angeordnete, durchgehende Gewindebohrung auf, in der ein durch eine Bohrung in der Wandung der Haltestange in das Füllstück einschraubbarer Gewindestift angeordnet ist.

Mit dieser Vorrichtung können Toleranzen ausgeglichen und der optische Gesamteindruck verbessert werden, jedoch kommt es auch hier zu Verletzungen des Bodenbelages und von Innenteilen durch die Verschraubung.

Als eine weitere Variante beschreibt die DE102011006383.8 eine Vorrichtung zur Befestigung einer Haltestange, wobei die Vorrichtung mindestens ein Befestigungselement zum Befestigen der Vorrichtung an einer tragenden Konstruktion, mindestens ein Verbindungselement und mindestens eine Haltestange umfasst, wobei mindestens ein Endabschnitt der Haltestange ein haltestangenseitiges Innengewinde aufweist, wobei das Verbindungselement ein erstes Außengewinde aufweist, wobei das Außengewinde in das haltestangenseitige Innengewinde einschraubbar ist, wobei ein befestigungselementseitiger Abschnitt des Befestigungselements ein befestigungselementseitiges Innengewinde aufweist, wobei das erste Außengewinde oder ein zweites Außengewinde des Verbindungselements in das befestigungselementseitige Innengewinde einschraubbar ist.

Diese Anordnung verbessert zwar den optischen Gesamteindruck, verringert die Verletzungsgefahr und erleichtert die Reinigung, doch auch hier werden Fahrzeugteile durch eine ortsfeste Verschraubung verletzt.

Daher stellt sich die technische Aufgabe eine verbesserte Haltestangenvorrichtung für den öffentlichen Personenverkehr bereitzustellen, die flexibel im Fahrzeug montierbar ist und keine Verletzung von Bodenplatten und des Bodenbelages oder anderen ortsfesten Teilen des Innenraumes mit sich bringt.

Erfindungsgemäß wird die Aufgabe durch eine Haltestangenvorrichtung nach Anspruch 1 gelöst. Vorteilhafte Weiterbildungen der Haltestange sind in den Unteransprüchen angegeben.

Die Erfindung betrifft im Einzelnen eine Haltestangenvorrichtung für ein Fahrzeug des öffentlichen Nah- und Fernverkehrs, aufweisend die miteinander gekoppelten Teile:
- ein an einem ersten, oberen Ende der Vorrichtung angeordnetes Verbindungsstück zum Befestigen der Haltestangenvorrichtung in einem Innenraum des Fahrzeugs
- eine Haltestange,
- einen an einem zweiten, unteren Ende der Vorrichtung angeordneten Fuß mit einer Auflagefläche, mit welcher die Haltestangenvorrichtung auf einen Untergrund im Innenraum des Fahrzeugs aufsetzbar ist,
- ein innerhalb der Haltestangenvorrichtung angeordnetes Längenverstellelement, womit die Haltestangenvorrichtung in ihrer Länge verstellbar ist, sodass in Einbaulage der Haltestangenvorrichtung die Auflagefläche gegen den Untergrund pressbar ist.

Vorteilhaft wirkt sich die erfindungsgemäße Haltestangenvorrichtung durch ihre flexiblen Montagemöglichkeiten fast überall im Fahrzeug aus, da keine zusätzlichen Fixier- oder Montagepunkte in der Fahrzeugstruktur vorzusehen sind.

Die Befestigung am Boden oder einem anderen Untergrund geschieht durch Druck, ohne dabei den Fußbodenbelag oder andere Bauteile oder Beläge zu verletzen. Dadurch ist ein Umbau ohne Beschädigungen an den Innenausbauteilen des Fahrzeugs möglich, so dass diese nicht ausgetauscht werden müssen.

Eine rasche Montage und eine einfache Demontage werden dadurch ermöglicht.

Zudem ist es weiter möglich, leichte Toleranzen, wie Bautoleranzen, mittels der erfindungsgemäßen Haltestangenvorrichtung auszugleichen.

Durch die genannten Vorteile erhöht sich auch der Passagierkomfort, da mit einem relativ geringen Aufwand zusätzliche Haltestangen in den Fahrzeugen angebracht werden können.

Die erfindungsgemäße Haltestangenvorrichtung ist in allen möglichen Fahrzeugen des öffentlichen Nah- und Fernverkehrs, wie beispielsweise in Bussen, Straßenbahnen, Stadtbahnen, Metros aber auch Vollbahnen weltweit und universell einsetzbar. Es handelt sich um eine einfache Anwendung, die nachgerüstet aber auch leicht zurück gebaut werden kann. Sie ist auch als Einbau- oder Nachrüstteil für ältere bestehende Fahrzeuge leicht verwendbar.

In einer Ausführungsform weist das erfindungsgemäße Längenverstellelement ein erstes Gewinde auf, das in ein zweites Gewinde greift, welches an einem benachbarten Teil in der Haltestangenvorrichtung ausgebildet ist, sodass bei Drehen des Längenverstellelements die Länge der Haltestangenvorrichtung verstellbar ist. Das erste Gewinde kann ein Außengewinde sein und das zweite ein Innengewinde oder umgekehrt.

In einer bevorzugten Ausführungsform enthält das Längenverstellelement ein Verbindungsformmerkmal, das in ein weiteres Verbindungsformmerkmal, das an dem Verbindungsstück oder an der Haltestange ausgebildet ist, eingreifen oder dieses weitere Verbindungsformmerkmal umgreifen kann. Dies trägt zu einer erhöhten Stabilität der Haltestangenvorrichtung bei. Beispielsweise kann das Verbindungsformmerkmal eine Erhebung oder Vorsprung, insbesondere ein Bolzen sein, der in eine Vertiefung an dem Verbindungsstück oder an der Haltestange eingreifen kann, oder umgekehrt.

Weiter bevorzugt enthält das Längenverstellelement ein Formmerkmal, das zum Verstellen des Längenverstellelements mit einem komplementär geformten Werkzeug kontaktierbar ist. Das Formmerkmal kann beispielsweise von einem Werkzeug umfassbar sein.

Ein solches Formmerkmal kann ein gebräuchliches Schraubelement, wie ein Außenvierkant oder ein Außensechskant sein. Das Formmerkmal kann eine Versteifung sein, in welche ein Werkzeug eingreifen kann. Andere Formmerkmale sind ebenso denkbar.

In einer besonderen Ausführungsform der Erfindung enthält das Längenverstellelement einen Anschlag, dieser Anschlag kann an einem erwähnten Formmerkmal selbst aber auch an anderer Stelle ausgebildet sein. An dem Anschlag kann ein erwähntes Verbindungsstück oder eine Haltestange anschlagen.

Das Längenverstellelement kann an verschiedenen Stellen der Haltestangenvorrichtung angeordnet sein. Vorzugsweise befindet es sich zwischen dem Verbindungsstück und der Haltestange, es ist ebenso möglich, dass das Längenverstellelement zwischen Haltestange und Fuß oder innerhalb einer mehrteiligen Haltestange angeordnet ist.

In einer besonderen Ausführungsform enthält die erfindungsgemäße Haltestangenvorrichtung ein Fixierelement, mit dem die Lage des Längenverstellelements relativ zu einem benachbarten Teil der Haltestangenvorrichtung fixierbar ist. Fixierelement im Sinne der Erfindung ist jedes technische Element, welches geeignet ist, das Längenverstellelement in seiner eingestellten Position zu fixieren.

Ein Fixierelement ist besonders vorteilhaft einsetzbar, wenn das Längenverstellelement ein erwähntes Gewinde aufweist. Beispielsweise wird als Fixierelement eine Mutter eingesetzt. Es ist die Verwendung einer gebräuchlichen Mutter aber auch der Einsatz speziellerer Muttern, wie beispielsweise einer selbstsichernden Mutter denkbar. In einer Ausführungsform der Erfindung ist die Mutter dergestalt auf dem ersten Gewinde des Längenverstellelements positioniert, dass zur Fixierung der Haltestangenvorrichtung in einer eingestellten Position, die Mutter gegen einen benachbarten Teil der Haltestangenvorrichtung gepresst wird.

In einer besonderen Ausführungsform der Erfindung ist das Fixierelement mit einem weiteren Element gesichert, das als Sicherungselement bezeichnet wird. Als weiteres Element kann eine Schraubensicherungen eingesetzt werden. Eine solche Schraubensicherung kann aus allen gebräuchlichen Schraubensicherungen ausgewählt sein, wie beispielsweise eine zweite Mutter als Kontermutter, eine Beilagscheibe, ein Federring, eine Sicherungsscheibe, ein Keilsicherungsscheibenpaar oder eine selbstsichernde Mutter.

Das Verbindungsstück im Sinne der Erfindung kann unterschiedlich ausgebildet sein. In einer Ausführungsform enthält es mindestens ein Befestigungselement zur Befestigung an einem ortsfesten Fahrzeugteil.

In einer Ausführungsform weist das Verbindungsstück zumindest ein Befestigungselement zum Befestigen im Innenraum des Fahrzeugs auf. Das Befestigungselement kann integral mit dem Verbindungsstück ausgebildet sein oder als separates, insbesondere verstellbares oder lösbares Teil, vorliegen.

Bevorzugt ist das Befestigungselement zur Befestigung an einer weiteren Haltestange, einer Decke, einer Montageschiene im Innenraum des Fahrzeugs, einer Seitenwand des Fahrzeugs, einem Sitz oder einem anderen fixen Fahrzeugteil ausgebildet. Hierbei kann die weitere Haltestange horizontal oder vertikal ausgerichtet sein.

Entsprechend ist die Einbaulage der Haltestange je nach Bedürfnis vertikal, horizontal oder auch schräg.

Das Befestigungselement des Verbindungsstücks kann ausgewählt sein aus allen gebräuchlichen Befestigungsarten. Besonders bevorzugt wird das Verbindungsstück über eine Montageschiene oder mittels Kloben an den ortsfesten Teilen befestigt. Eine andere Variante stellen ein Flansch zur Deckenbefestigung oder eine Schelle zum Umgreifen an einer Querstange dar. Weitere Befestigungsmöglichkeiten sind ebenfalls denkbar.

Der an einem zweiten, unteren Ende der Haltestangevorrichtung angeordnete Fuß kann vielseitig ausgebildet sein. Vorzugsweise handelt es sich um eine runde Platte, eine eckige Platte ist ebenso möglich. In einer besonderen Ausführungsform handelt es sich um einen seitlich auskragenden Fuß.

Zur Erhöhung der Stabilität enthält der Fuß vorzugsweise Versteifungen, wie beispielsweise eine Stege oder einen durchgehenden Ring oder Kegel.

Die unterhalb des Fußes angeordnete Auflagefläche ist dergestalt ausgebildet, dass sie zum Untergrund im Innenraum des Fahrzeugs einen höheren Reibungskoeffizienten als übriges Material des Fußes besitzt.

Die Auflagefläche kann durch ein Auflageelement realisiert sein, welches unterhalb des Fußes angebracht ist. Dieses Auflageelement kann an den Fuß geklebt, geschraubt, geklemmt oder anderweitig angeordnet sein.

Der Reibungskoeffizient ist ein Maß für die Reibungskraft zwischen zwei Körpern. Die Reibungskraft ist die Kraft die bei der Bewegung zweier Körper aufeinander durch Reibung entsteht und die Bewegung hemmt. Sie muss aufgewendet werden, um die Körper aufeinander bewegen zu können. Sie ist abhängig von der Kraft mit der ein Körper gegen den anderen Körper gepresst wird, insbesondere einer Gewichtskraft oder einer extern eingeleiteten Kraft, dem Material, von der Oberflächenbeschaffenheit und der Reibungsfläche der Körper.

In der erfindungsgemäßen Haltestangenvorrichtung wird in einer Ausführungsform ein Elastomer als Material zur Ausbildung der Auflagefläche verwendet. Als Elastomer im Sinne der Erfindung werden formfeste, elastisch verformbare Kunststoffe bezeichnet, deren Glasübergangspunkt sich unterhalb der Raumtemperatur befindet. Sämtliche Elastomere können eingesetzt werden, besonders bevorzugt ist eine Gummimatte.

Um den Reibungskoeffizienten weiter zu erhöhen, ist in einer anderen Ausführungsform die Auflagefläche zur Erhöhung der Reibung beim Pressen auf den Untergrund profiliert, gerändelt oder aufgeraut.

Als Untergrund im Sinne der Erfindung ist das mit der Auflagefläche kontaktierte Fahrzeugteil bezeichnet, dies kann der Fahrzeugboden, die Fahrzeugwand oder eine andere plane Fläche im Innenraum des Fahrzeugs sein.

Ebenfalls Gegenstand der Erfindung ist ein Fahrzeug, insbesondere ein Schienenfahrzeug, welches die erfindungsgemäße Haltestangenvorrichtung aufweist. Beispielhafte Schienenfahrzeuge sind Straßenbahnen, S-Bahnen, U-Bahnen, Nahverkehrszüge, Fernverkehrszüge, sowie Bestandteile davon, wie Triebwagen, Waggons und Lokomotiven. Beispielhafte andere Fahrzeuge sind Busse, LKW, Transporter, Schiffe.

Weitere Vorteile und Ausgestaltungen der Erfindung ergeben sich aus der nachfolgenden Beschreibung von Ausführungsbeispielen unter Bezugnahme auf die beiliegenden Figuren. Es zeigen:
- Fig. 1:: Schnittdarstellung vom oberen verbindungsstückseitigen Teil der erfindungsgemäßen Haltestangenanordnung
- Fig. 2:: Schnittdarstellung vom zweiten, unteren Ende der Vorrichtung
- Fig. 3:: Aufsicht Fuß
- Fig. 4:: Schnittdarstellung vom Fuß mit Auflagefläche
- Fig. 5:: Schnittdarstellung seitlich auskragender Fuß mit Auflagefläche
- Fig. 6:: Schnittdarstellung der gesamten Haltestangenvorrichtung

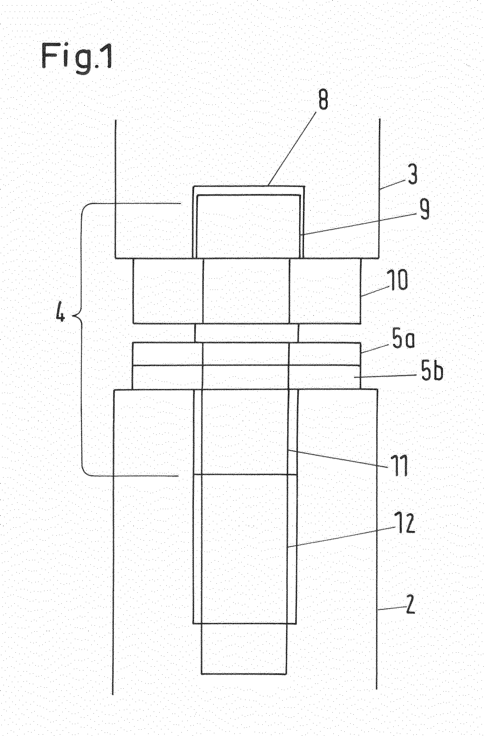

In Figur 1 ist eine bevorzugte Ausführungsform der Erfindung dargestellt. Das Verbindungsstück 3 enthält eine haltestangenseitige Öffnung 8.Das Längenverstellelement 4 ist hier aus einem dem Verbindungsstück zugewandten Bolzen 9, einem haltestangenseitigen Außengewinde als erstes Gewinde11 und einem zwischen dem verbindungsstückseitigem Bolzen 9 und dem Außengewinde 11 angeordneten Formmerkmal 10 in Form eines Sechskants aufgebaut.

Die Fläche zwischen den Elementen 3 und 4 kann auch für eine höhere Reibung bearbeitet sein (Rändelung des Materials, Beschichtung etc.)

Der Bolzen 9 des Längenverstellelements 4 ist in die Öffnung 8 des Verbindungsstücks 3 einbringbar und kann darin frei gedreht werden.

Die Haltestange 2 enthält ein längenverstellelementseitiges Innengewinde als zweites Gewinde 12 . Das haltestangenseitige Außengewinde des Längenverstellelements 4 ist mit dem Längenverstellelement-seitigen Innengewinde der Haltestange 2 verschraubbar.

Eine Fixiermutter ist, als Fixierelement 5a, an dem haltestangenseitigem Außengewinde angebracht und mit einem Sicherungselement 5b, ausgebildet als Kontermutter, gesichert.

Mittels des Längenverstellelements 4 ist die Haltestange 2 zwischen dem Verbindungsstück 3 und dem mit der Auflagefläche 7 kontaktierten Fahrzeugteil, vorzugsweise einem Fahrzeugboden, verspannt Dabei ist das Längenverstellelement 4 dergestalt mit der Haltestange 2 verschraubt, dass das Verbindungsstück 3 und das Längenverstellelement 4 gegeneinander gepresst und das Verbindungsstück 3 und die Haltestange 2 durch Drehen des Längenverstellelementes 4 an dem Formmerkmal 10 auseinander gedrückt werden. Das Längenverstellelement 4 kann auch mit einem weiteren Teil als Abdeckung (nicht dargestellt) abgedeckt werden. Diese Abdeckung kann aus ästhetischen Gründen eingesetzt werden und dient dazu, die Verstellelemente zu verbergen.

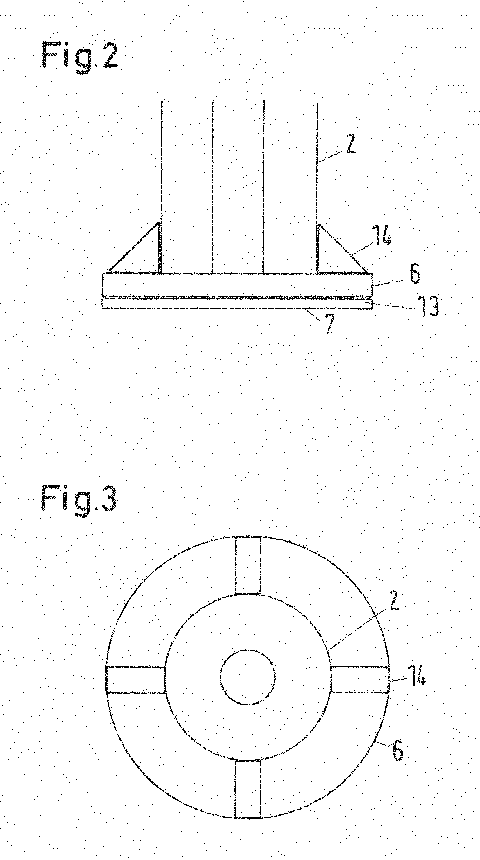

In Figur 2 ist das zweite, untere Ende der Haltestangenvorrichtung mit Haltestange 2, Fuß 6 und Auflageelement 13 mit Auflagefläche 7 dargestellt. Eine Versteifung 14 um die Stabilität des Fußes zu gewährleisten ist ebenfalls beispielhaft dargestellt.

Figur 3 zeigt eine Aufsicht auf einen beispielhaften Fuß 6 mit Haltestange 2, welcher als Scheibe ausgebildet und mit Versteifungen 14 in Form von Stegen ausgebildet ist.

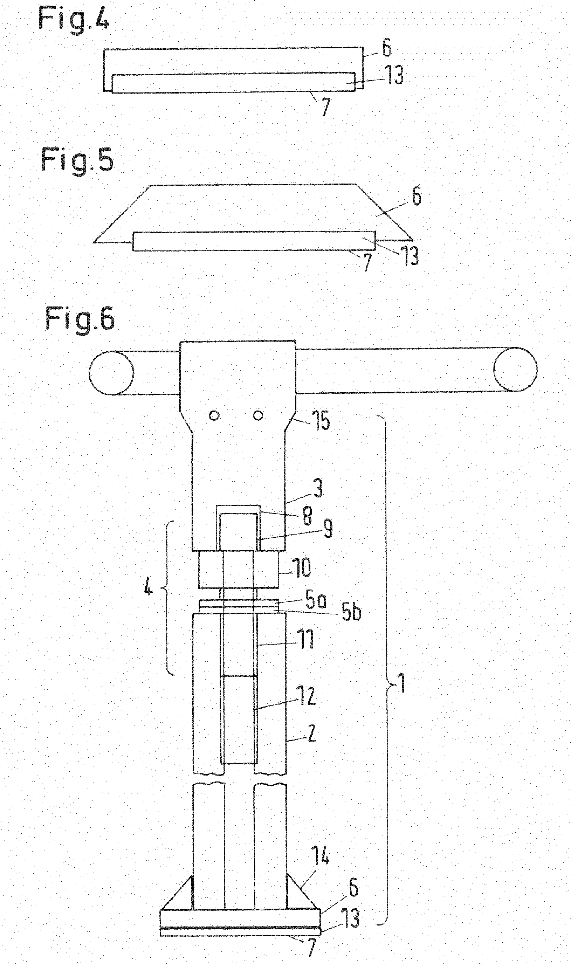

In Figur 4 ist eine Schnittdarstellung eines Fußes 6 mit Auflageelement 13 und Auflagefläche 7 gezeigt, bei der der Fuß 6 als runde oder eckige Platte ausgebildet ist und die Auflagefläche 7 seitlich überragt.

Figur 5 zeigt einen kegelförmigen Fuß 6 über ein Auflageelement 13 mit einer Auflagefläche 7.

In Figur 6 ist eine komplette Haltestangenvorrichtung 1 in Schnittdarstellung dargestellt. Das Längenverstellelement 4 befindet sich zwischen dem Verbindungsstück 3 und der Haltestange 2. Alle weiteren Elemente wurden in vorangehenden Einzeldarstellungen erläutert.

### Bezugszeichenliste

- 1 -: Haltestangenvorrichtung
- 2 -: Haltestange
- 3 -: Verbindungsstück
- 4 -: Längenverstellelement
- 5a -: Fixierelement
- 5b -: Sicherungselement
- 6 -: Fuß
- 7 -: Auflagefläche
- 8 -: Öffnung
- 9 -: Bolzen
- 10 -: Formmerkmal
- 11 -: erstes Gewinde
- 12 -: zweites Gewinde
- 13 -: Auflageelement
- 14 -: Versteifung
- 15 -: Befestigungselement

## Patentansprüche

1. Haltestangenvorrichtung für ein Fahrzeug des öffentlichen Nah- und Fernverkehrs, aufweisend die miteinander gekoppelten Teile:
- ein an einem ersten, oberen Ende der Vorrichtung angeordnetes Verbindungsstück (3) zum Befestigen der Haltestangenvorrichtung (1) in einem Innenraum des Fahrzeugs
- eine Haltestange (2),
- einen an einem zweiten, unteren Ende der Vorrichtung angeordneten Fuß (6) mit einer Auflagefläche (7), mit welcher die Haltestangenvorrichtung auf einen Untergrund im Innenraum des Fahrzeugs aufsetzbar ist,
- ein innerhalb der Haltestangenvorrichtung angeordnetes Längenverstellelement (4), womit die Haltestangenvorrichtung in ihrer Länge verstellbar ist, sodass in Einbaulage der Haltstangenvorrichtung die Auflagefläche (7) gegen den Untergrund pressbar ist

2. Haltestangenvorrichtung nach Anspruch 1, wobei das Längenverstellelement (4) ein erstes Gewinde (11) aufweist, das in ein zweites Gewinde (12) greift, welches an einem benachbarten Teil in der Haltestangenvorrichtung ausgebildet ist, sodass bei Drehen des Längenverstellelements (4) die Länge der Haltstangenvorrichtung verstellbar ist.

3. Haltestangenvorrichtung nach einem der vorangehenden Ansprüche, wobei das Längenverstellelement ein Formmerkmal (10) aufweist, das zum Verstellen des Längenverstellelements (4) mit einem komplementär geformten Werkzeug kontaktierbar ist.

4. Haltestangenvorrichtung nach einem der vorangehenden Ansprüche, aufweisend ein Fixierelement (5a), mit dem die Lage des Längenverstellelements (4) relativ zu einem benachbarten Teil der Haltestangenvorrichtung fixierbar ist.

5. Haltestangenvorrichtung nach einem der vorangehenden Ansprüche, wobei das Verbindungsstück (3) zumindest ein Befestigungselement (15) zum Befestigen im Innenraum des Fahrzeugs aufweist.

6. Haltestangenvorrichtung nach Anspruch 5, wobei das Befestigungselement (15) ausgebildet ist zur Befestigung an einer weiteren Haltestange, einer Decke, einer Montageschiene im Innenraum des Fahrzeugs, einer Seitenwand des Fahrzeugs, einem Sitz oder einem anderen fixen Fahrzeugteil.

7. Haltestangenvorrichtung nach einem der vorangehenden Ansprüche, wobei die Auflagefläche (7) aus einem Elastomer ausgebildet ist.

8. Haltestangenvorrichtung nach einem der vorangehenden Ansprüche, wobei die Auflagefläche (7) profiliert, gerändelt oder aufgeraut ist.

9. Haltestangenvorrichtung nach einem der vorangehenden Ansprüche, wobei der Fuß (6) ein seitlich auskragender Fuß ist.

10. Fahrzeug, insbesondere Schienenfahrzeug, aufweisend eine Haltestangenvorrichtung nach einem der Ansprüche 1-9.

## Claims

1. A holding rod device for a local and long-distance public transport vehicle, the holding rod device having the following parts coupled to one another:
- a connection piece (3) arranged at a first, upper end of the device for securing the holding rod device (1) in an interior of the vehicle;
- a holding rod (2);
- a foot (6), arranged at a second, lower end of the device and having a bearing surface (7), by means of which the holding rod device can be placed on a supporting surface in the interior of the vehicle;
- a length adjustment element (4), which is arranged inside the holding rod device and by means of which the length of the holding rod device is adjustable so that the bearing surface (7) can be pressed against the supporting surface in the installed position of the holding rod device.

2. The holding rod device according to claim 1,
wherein the length adjustment element (4) has a first thread (11), which engages in a second thread (12), which is formed on an adjacent part in the holding rod device so that the length of the holding rod device is adjustable as the length adjustment element (4) is rotated.

3. The holding rod device according to one of the preceding claims, wherein the length adjustment element has a shaped feature (10), which can be contacted with a tool of complementary form in order to adjust the length adjustment element (4).

4. The holding rod device according to one of the preceding claims, comprising a fixing element (5a), by means of which the position of the length adjustment element (4) relative to an adjacent part of the holding rod device can be fixed.

5. The holding rod device according to one of the preceding claims, wherein the connection piece (3) has at least one fastening element (15) for fastening in the interior of the vehicle.

6. The holding rod device according to claim 5,
wherein the fastening element (15) is designed to be fastened to a further holding rod, a ceiling, a mounting rail in the interior of the vehicle, a side wall of the vehicle, a seat or another fixed vehicle part.

7. The holding rod device according to one of the preceding claims, wherein the bearing surface (7) is formed from an elastomer.

8. The holding rod device according to one of the preceding claims, wherein the bearing surface (7) is profiled, knurled or roughened.

9. The holding rod device according to one of the preceding claims, wherein the foot (6) is a laterally projecting foot.

10. A vehicle, in particular a rail vehicle,
comprising a holding rod device according to one of claims 1-9.

## Revendications

1. Dispositif à tige de retenue pour un véhicule du transport public courte et longue distance, présentant les parties couplées entre elles :
- une pièce de liaison (3) disposée au niveau d'une première extrémité supérieure du dispositif, pour fixer le dispositif à tige de retenue (1) dans un habitacle du véhicule,
- une tige de retenue (2),
- un pied (6) disposé au niveau d'une deuxième extrémité inférieure du dispositif, avec une surface d'appui (7), par laquelle le dispositif à tige de retenue peut être placé sur un support dans l'habitacle du véhicule,
- un élément d'ajustement de longueur (4) disposé à l'intérieur du dispositif à tige de retenue, avec lequel le dispositif à tige de retenue peut être ajusté dans sa longueur si bien qu'en position de montage du dispositif à tige de retenue, la surface d'appui (7) peut être pressée contre le support.

2. Dispositif à tige de retenue selon la revendication 1, dans lequel l'élément d'ajustement de longueur (4) présente un premier filetage (11), qui s'engage dans un deuxième filetage (12), lequel est réalisé au niveau d'une partie adjacente dans le dispositif à tige de retenue si bien que lors de la rotation de l'élément d'ajustement de longueur (4), la longueur du dispositif à tige de retenue peut être ajustée.

3. Dispositif à tige de retenue selon l'une quelconque des revendications précédentes, dans lequel l'élément d'ajustement de longueur présente une configuration de forme (10), qui peut être mise en contact avec un outil configuré de manière complémentaire pour ajuster l'élément d'ajustement de longueur (4).

4. Dispositif à tige de retenue selon l'une quelconque des revendications précédentes, présentant un élément de blocage (5a), avec lequel la position de l'élément d'ajustement de longueur (4) par rapport à une partie adjacente du dispositif à tige de retenue peut être bloquée.

5. Dispositif à tige de retenue selon l'une quelconque des revendications précédentes, dans lequel la pièce de liaison (3) présente au moins un élément de fixation (15) destiné à être fixé dans l'habitacle du véhicule.

6. Dispositif à tige de retenue selon la revendication 5, dans lequel l'élément de fixation (15) est réalisé de façon à être fixé au niveau d'une autre tige de retenue, d'un plafond, d'un rail de montage dans l'habitacle du véhicule, d'une paroi latérale du véhicule, d'un siège ou d'une autre partie de véhicule fixe.

7. Dispositif à tige de retenue selon l'une quelconque des revendications précédentes, dans lequel la surface d'appui (7) est réalisée à partir d'un élastomère.

8. Dispositif à tige de retenue selon l'une quelconque des revendications précédentes, dans lequel la surface d'appui (7) est profilée, moletée ou rendue rugueuse.

9. Dispositif à tige de retenue selon l'une quelconque des revendications précédentes, dans lequel le pied (6) est un pied en porte-à-faux latéralement.

10. Véhicule, en particulier véhicule sur rails, présentant un dispositif à tige de retenue selon l'une quelconque des revendications 1 à 9.
